# EUROPÄISCHE PATENTANMELDUNG

(11) **EP 4 477 076 A1**
(43) Veröffentlichungstag der Anmeldung: **18.12.2024**
(21) Anmeldenummer: 24181996.0
(22) Anmeldetag: 13.06.2024
(51) Int. Cl.: A01K 1/03, A01K 1/035

(54) **TIERMÖBEL**

(30) Priorität: 14.06.2023 DE 102023115510
(71) Anmelder: Anders, Elena, 35799 Merenberg (DE)
(72) Erfinder: Anders, Elena, 35799 Merenberg (DE)
(74) Vertreter: Habermann Intellectual Property Partnerschaft von Patentanwälten mbB

(57) **Zusammenfassung**

Ein Tiermöbel (1) für Haustiere, insbesondere für Katzen, weist zwei oder mehrere miteinander verbindbare Tiermöbelelemente (5) auf, wobei mindestens zwei Tiermöbelelemente (5) übereinander angeordnet lösbar formschlüssig miteinander verbindbar sind. Mindestens ein Tiermöbelelement (5) weist eine mit einer Funktionsschicht bedeckte Funktionsoberfläche (12) auf. Mindestens ein Tiermöbelelement (5) ist als Sitzmöbelelement (2, 3, 4) ausgebildet und weist einen Sitzmöbelgrundkörper (6) mit einer Standfläche (7) und mit einem gegenüberliegend an dem Sitzmöbelgrundkörper (6) angeordneten Sitzelement (8) auf. Das Sitzmöbelelement (2, 3, 4) kann mit der Standfläche (7) auf einer Bodenfläche aufgestellt werden, sodass das Sitzelement (8) in einem Sitzabstand von der Standfläche (7) angeordnet ist und eine ausreichend große von der Standfläche (7) weg gerichtete Sitzfläche aufweist, sodass die Sitzfläche des auf der Bodenfläche aufstehenden Sitzmöbelelements (2, 3, 4) eine Sitzgelegenheit für eine Person bildet.

## Beschreibung

Die Erfindung betrifft ein Tiermöbel für Haustiere, insbesondere für Katzen, mit zwei oder mehreren miteinander verbindbaren Tiermöbelelementen, wobei mindestens zwei Tiermöbelelemente übereinander angeordnet lösbar formschlüssig miteinander verbindbar sind, und wobei mindestens ein Tiermöbelelement eine mit einer Funktionsschicht bedeckte Funktionsoberfläche aufweist.

Für Haustiere wie beispielsweise Katzen sind aus der Praxis verschiedene Tiermöbel bekannt, mit denen verschiedene Bedürfnisse der Haustiere, wie beispielsweise das Wetzen von Krallen oder beabstandet von einer Bodenfläche angeordnete Spielorte und Rückzugsorte befriedigt werden können. Für Katzen sind Kratzbäume bekannt, die üblicherweise eine zylinderförmige oder ebenflächig ausgebildete Funktionsoberfläche aufweisen, die mit Faserstoffen wie beispielsweise Sisal oder mit Naturstoffen, wie beispielsweise Rinde, Holz oder Bananenblätter beschichtet sind. Das Haustier kann an der derart beschichteten Funktionsoberfläche des Kratzbaums seine Krallen wetzen. Manche dieser Kratzbäume weisen zusätzliche Spielflächen oder höhlenartige Rückzugsorte auf, auf denen oder in denen sich die Haustiere aufhalten können. Dabei weisen die als Rückzugsorte vorgesehenen Oberflächen oder Hohlräume oftmals eine weiche Beschichtung beispielsweise mit Vliesstoffen oder Kunstfell sowie gegebenenfalls eine zusätzliche Polsterung auf, um eine für das Haustier möglichst angenehme Umgebung und einen dadurch attraktiven Rückzugsort bieten zu können.

Neben Kratzbäumen sind auch Tiermöbel bekannt, die mehrere miteinander verbundene, Tiermöbelelemente aufweisen, die unterschiedlichen Zwecken dienen können. Der Raumbedarf für derartige Tiermöbel kann dabei vergleichsweise groß sein, was sowohl die von dem Tiermöbel eingenommene Standfläche als auch das von dem Tiermöbel eingenommene Raumvolumen betreffen kann. Bei manchen Tiermöbeln sind die einzelnen Tiermöbelelemente lösbar miteinander verbindbar, wodurch sich ein Transport solcher Tiermöbel zu einem vorgesehenen Aufstellungsort erleichtert. Zudem können die einzelnen Tiermöbelelemente gegebenenfalls unterschiedlich zueinander angeordnet werden, sodass ein aus mehreren miteinander verbundenen Tiermöbelelementen bestehendes Tiermöbel bei Bedarf umgestaltet und die einzelnen Tiermöbelelemente relativ zueinander neu angeordnet werden können, um einem Haustier neue und anregende Möglichkeiten zum Spielen und aufhalten zu geben.

Insbesondere bei großvolumigen Tiermöbeln, die für Haustiere besonders attraktiv sind, kann der von dem Tiermöbel beanspruchte Raum nicht ohne weiteres für andere Verwendungszwecke verwendet werden. Eine gleichzeitige Nutzung des von dem Tiermöbel eingenommenen Raums durch Haustiere und Personen ist üblicherweise nicht möglich. Wenn der von dem Tiermöbel üblicherweise eingenommene Raum zeitweilig von Personen genutzt werden können soll, um beispielsweise in einer Wohnung, in welcher das Tiermöbel aufgestellt ist, eine Feier mit mehreren Gästen durchzuführen, muss das Tiermöbel regelmäßig weggeräumt werden, um den freiwerdenden Raum für Gäste nutzen zu können.

Es wird deshalb als eine Aufgabe der vorliegenden Erfindung angesehen, ein Tiermöbel für Haustiere mit mehreren miteinander verbindbaren Tiermöbelelementen so auszugestalten, dass eine zeitweise Nutzung des von dem Tiermöbel eingenommenen Raums durch Personen ermöglicht, bzw. erleichtert wird.

Diese Aufgabe wird erfindungsgemäß dadurch gelöst, dass mindestens ein Tiermöbelelement als Sitzmöbelelement ausgebildet ist und einen Sitzmöbel Grundkörper mit einer Standfläche und mit einem gegenüberliegend an dem Sitzmöbelgrundkörper angeordneten Sitzelement aufweist, wobei das Sitzmöbelelement mit der Standfläche auf einer Bodenfläche aufstellbar ist und das Sitzelement in einem Sitzabstand von der Standfläche angeordnet ist und eine ausreichend große von der Standfläche weg gerichtete Sitzfläche aufweist, sodass die Sitzfläche des auf der Bodenfläche aufstehenden Sitzmöbelelements eine Sitzgelegenheit für eine Person bildet. Auf diese Weise ist es möglich, dass als Sitzmöbelelement ausgebildete Tiermöbelelement von anderen Tiermöbelelementen zu trennen und als Sitzgelegenheit für eine Person zu verwenden. Gegebenenfalls kann das Tiermöbel mehrere als Sitzmöbelelemente ausgebildete Tiermöbelelemente aufweisen oder aber sogar ausschließlich aus Tiermöbelelementen zusammengefügt sein, die gleichzeitig auch als Sitzmöbelelement ausgebildet sind und jeweils als Sitzgelegenheit für eine Person dienen können. Bei Bedarf kann dann das Tiermöbel in die einzelnen Sitzmöbelelemente zerlegt werden und die einzelnen Sitzmöbelelemente unabhängig voneinander so angeordnet und aufgestellt werden, dass die einzelnen Sitzmöbelelemente für mehrere Personen jeweils eine einem Anlass angemessener Sitzgelegenheit bieten. Mehrere solche Sitzmöbelelemente können mit beliebigen Tiermöbelelementen zu einem Tiermöbel kombiniert werden. Die einzelnen Tiermöbelelemente können beispielsweise Leitern oder Spielelemente sein. Die Tiermöbelelemente können austauschbare Oberflächen aufweisen oder austauschbare Spielelemente aufweisen, die beweglich oder starr an einem Tiermöbelelementgrundkörper gelagert oder festgelegt oder ausgebildet sind. Es ist ebenfalls denkbar, dass ein Tiermöbelelement ein Kletternetz aufweist. Weiterhin können einzelne Tiermöbelelemente dauerhaft montierte oder auswechselbare und gegebenenfalls verstellbare Standfüße oder Sockelelemente aufweisen, um die Tiermöbelelemente in der Höhe verstellen oder unterschiedlich ausrichten zu können.

Jedes Sitzmöbelelement weist zu diesem Zweck eine Standfläche auf, die vorzugsweise eine standsichere Aufstellung des Sitzelements auf der Bodenfläche ermöglicht. Die Standfläche ist zweckmäßigerweise ausreichend großflächig, sodass das Sitzmöbelelement während einer bestimmungsgemäßen Verwendung als Sitzgelegenheit für eine Person nicht unbeabsichtigt verkippen oder umfallen kann. Für viele Anwendungsfälle dürfte beispielsweise eine kreisförmige Standfläche mit einem Durchmesser von 30 cm und mehr oder aber eine rechteckförmige Standfläche mit einer Seitenlänge von 20-30 cm und mehr zweckmäßig sein. Die Standfläche des Sitzmöbelelements kann beispielsweise von einem Schubladenelement mit einer ausziehbaren Schublade oder von einem Staufach mit einer verschwenkbaren oder lösbaren Verschlussplatte gebildet werden.

Auch das Sitzelement sollte eine Sitzfläche aufweisen, die ausreichend groß ist, sodass die Sitzfläche eine angenehme, bzw. bequeme Sitzgelegenheit für eine Person bilden kann. Erfahrungsgemäß sollte das Sitzelement eine möglichst Ebene oder lediglich leicht gekrümmte Sitzfläche aufweisen, deren nutzbare Fläche mehr als 0,1 Meterquadrat und vorzugsweise mehr als 0,3 Meterquadrat, beziehungsweise mehr als 0,5 Meterquadrat groß ist.

Der Sitzmöbelgrundkörper kann unterschiedliche Formgebungen aufweisen. So kann der Sitzmöbelgrundkörper zwischen der Standfläche und dem Sitzelement stabförmig oder tonnenförmig ausgebildet sein und an einem dem Sitzelement gegenüberliegenden Ende eine die Standfläche bildende Standplatte aufweisen. Es ist ebenfalls denkbar, dass der Sitzelementgrundkörper würfelförmig oder quaderförmig ausgebildet ist und das Sitzelement gegenüber einer als Standfläche vorgesehenen Außenseite des Sitzelementgrundkörpers angeordnet oder ausgebildet ist. Der Abstand der Sitzfläche des Sitzelements zu der gegenüberliegend angeordneten Standfläche des Sitzmöbelelements sollte zweckmäßigerweise für die Verwendung als Sitzmöbel für eine Person angepasst sein und beispielsweise zwischen 30 cm und 80 cm, vorzugsweise zwischen 45 und 60 cm betragen.

Einer vorteilhaften Ausgestaltung des Erfindungsgedankens zur Folge kann vorgesehen sein, dass das Sitzelement eine Sitzplatte ist, die auf einer der Standfläche gegenüberliegenden Seite des Sitzmöbelelements lösbar mit dem Sitzmöbelgrundkörper verbindbar ist. Während einer Nutzung des Tiermöbels durch ein Haustier können alle für das Haustier zugänglichen Oberflächen des Tiermöbels zunehmend mit Tierhaaren bedeckt sein, verschmutzt werden oder aber beispielsweise durch das Wetzen der Krallen zerkratzt oder beschädigt werden. Erfahrungsgemäß werden derartige Oberflächen von Personen nur ungern als Sitzfläche einer Sitzgelegenheit verwendet. Durch die lösbare Verbindung einer Sitzplatte mit dem Sitzmöbelgrundkörper kann die Sitzplatte während der Nutzung des Tiermöbels durch ein Haustier von den Sitzmöbelgrundkörper getrennt für das Haustier unzugänglich aufbewahrt werden. Sobald ein Sitzmöbelelement des Tiermöbels als Sitzgelegenheit für eine Person verwendet werden soll, kann die Sitzplatte auf dem Sitzelementgrundkörper angeordnet und festgelegt werden, um eine saubere, tierhaarfreie und unzerkratzte Sitzfläche für eine Person zu bilden.

Einer besonders vorteilhaften Ausgestaltung des Erfindungsgedankens zur Folge ist vorgesehen, dass das Sitzelement wahlweise mit der Sitzfläche oder mit einer der Sitzfläche gegenüberliegenden Innenfläche nach außen gerichtet mit dem Sitzmöbelgrundkörper verbindbar ist. Das Sitzelement kann bei einer derartigen Ausgestaltung dauerhaft an dem Sitzmöbelgrundkörper angeordnet sein und während der bestimmungsgemäßen Verwendung des Tiermöbels durch Haustiere mit der Sitzfläche gegenüberliegenden Innenfläche nach außen gerichtet an dem Sitzmöbelgrundkörper verbunden sein, sodass nur die nach außen gerichtete Innenfläche für das Haustier zugänglich ist und die dem Sitzelementgrundkörper zugewandte Sitzfläche des Sitzelements vor einem Kontakt mit dem Haustier oder vor einer unerwünschten Verschmutzung geschützt ist. Bei Bedarf kann das Sitzelement von dem Sitzelementgrundkörper gelöst und mit der Sitzfläche nach außen wieder mit dem Sitzelementgrundkörper verbunden werden, um anschließend als Sitzgelegenheit für eine Person verwendet zu werden.

Das Sitzelement kann auf unterschiedliche Arten mit dem Sitzelementgrundkörper verbunden werden. Es ist denkbar, dass das Sitzelement rastend mit dem Sitzelementgrundkörper verbindbar ist. Es können ebenfalls ein Verbindungselement oder vorzugsweise mehrere Verbindungselemente wie beispielsweise manuell betätigbare oder federkraftbetätigbare Riegel oder formschlüssig in Eingriff bringbare Eingriffselemente vorgesehen sein, die eine formschlüssige Festlegung des Sitzelements an dem Sitzelementgrundkörper ermöglichen. Das Sitzelement kann auch auf eine dafür vorgesehene Ausformung des Sitzelementgrundkörpers aufgesteckt oder in eine der Standfläche gegenüberliegend ausgebildete Ausnehmung in dem Sitzelementgrundkörper eingeführt oder eingeschoben werden. Es ist ebenfalls denkbar, dass das Sitzelement schwenkbar an dem Sitzelementgrundkörper gelagert ist und bei Bedarf verschwenkt oder vollständig von dem Sitzelementgrundkörper gelöst werden kann.

Das Sitzelement kann unabhängig von der jeweiligen Ausgestaltung und Verbindung mit dem Sitzmöbelgrundkörper während der Nutzung des Sitzmöbelelements als Sitzgelegenheit mit einem Sitzkissen oder mit einem Sitzpolster bedeckt werden. Ein Sitzkissen oder ein Sitzpolster kann auch beispielsweise mit Bändern, Klemmen, Ösen oder mit einer Klettverbindung an der Sitzfläche des Sitzelements festgelegt oder zurückgehalten werden.

Im Hinblick auf eine möglichst einfache Handhabung eines lösbar mit dem Sitzmöbelgrundkörper verbindbaren Sitzelements kann optional vorgesehen sein, dass das Sitzelement ein Handhabungselement aufweist, mit welchem das Sitzelement mit einer Hand von einer Person ergriffen werden kann, um von dem Sitzelementgrundkörper gelöst oder damit verbunden zu werden. Bei einer schwenkbaren Festlegung des Sitzelements an dem Sitzelementgrundkörper kann das Sitzelement auch mit Hilfe des Handhabungselements verschwenkt und in einer anderen Position oder Ausrichtung relativ zu dem Sitzelementgrundkörper gehalten oder festgelegt werden. Das Handhabungselement kann beispielsweise ein Knauf oder ein Handgriff sein. Es ist ebenfalls denkbar und für viele Anwendungsfälle zweckmäßig, wenn das Handhabungselement eine entlang des Umfangrands des Sitzelements seitlich angeordnete Ausnehmung ist oder durch ein Loch oder durch mehrere Löcher gebildet wird, die im Abstand von dem Umfangsrand in der Sitzfläche ausgebildet sind. Ein Benutzer kann dann mit einem Finger oder mit mehreren Fingern in die seitliche Ausnehmung oder in ein Loch, beziehungsweise in mehrere Löcher eingreifen und das Sitzelement ergreifen, anheben und beliebig handhaben. Ein einzelnes Loch oder mehrere solche Löcher in dem Sitzelement können auch zur Verbindung von zwei aneinandergrenzenden Sitzmöbelelementen oder zur Verbindung eines beispielsweise seitlich an ein Sitzmöbelelement anlehnenden Tiermöbelelements verwendet werden und bieten Möglichkeiten für einen formschlüssigen Eingriff.

Im Hinblick auf einen möglichst hohen Sitzkomfort während der Nutzung des Sitzmöbelelements als Sitzgelegenheit kann optional vorgesehen sein, dass der Sitzmöbelgrundkörper eine Aufnahmeeinrichtung zur Aufnahme und Festlegung eines Rückenlehnenelements aufweist. Gegebenenfalls kann auch ein weiteres Sitzelement beispielsweise von einem anderen Sitzmöbelelement als Rückenlehnenelement verwendet und in einer entsprechenden Ausrichtung an dem Sitzmöbelgrundkörper festgelegt werden. Der Sitzmöbelgrundkörper kann beispielsweise im Bereich des Sitzelements entlang eines Umfangsrandabschnitts der Sitzfläche eine Nut oder einen Schlitz aufweisen, in welchen eine zungenförmige Ausformung oder gegebenenfalls mehrere zungenförmig ausgebildete Ausformungen eines Rückenlehnenelements eingeschoben oder eingesteckt werden können, um das Rückenlehnenelement in der vorgesehenen Anordnung und Ausrichtung an dem Sitzmöbelgrundkörper festzulegen. Es ist ebenfalls denkbar, dass ein Rückenlehnenelement mit mehreren Schrauben oder Klemmen an einer quer zu der Sitzfläche verlaufenden Seitenwand des Sitzmöbelgrundkörpers festlegbar ist.

Einer vorteilhaften Ausgestaltung des Erfindungsgedankens zur Folge kann vorgesehen sein, dass der Sitzmöbelgrundkörper einen von außen zugänglichen Hohlraum aufweist. Ein solcher Hohlraum kann als Rückzugsort für das Haustier vorgesehen sein. In diesem Fall kann der Hohlraum zumindest an einer der Standfläche zugewandten Innenseite oder aber vollständig mit einem für das Haustier angenehmen Material wie beispielsweise einem Textilmaterial, einem Kunstfellmaterial oder einem anderen flauschigen und weichen Material ausgekleidet sein. Gegebenenfalls kann die für das Haustier angenehme Verkleidung lösbar an den Innenflächen des Hohlraums angeordnet und festgelegt sein. Auf diese Weise kann eine in zeitlichen Abständen vorgesehene Reinigung der Verkleidung oder ein Wechsel, beziehungsweise ein vollständiger Austausch der Verkleidung erleichtert werden.

Es ist ebenfalls denkbar und einer anderen Ausgestaltung des Erfindungsgedankens zur Folge vorgesehen, dass eine Öffnung des Hohlraums von dem mit dem Sitzelementgrundkörper verbundenen Sitzelement bedeckt ist. In diesem Fall kann der Hohlraum auch als Stauraum für Gegenstände genutzt werden, die nicht für eine Benutzung durch Haustiere vorgesehen sind. Auf diese Weise kann das Tiermöbel mit einem einen Hohlraum aufweisenden Sitzmöbelelement während der bestimmungsgemäßen Nutzung durch ein Haustier gleichzeitig auch als Aufbewahrungsmöbel für Gegenstände für Personen genutzt werden.

Optional kann dabei vorgesehen sein, dass der von außen zugängliche Hohlraum eine Verkleidung aus einem thermisch isolierenden Material aufweist. Der Hohlraum in dem Sitzmöbelgrundkörper kann dann bei Bedarf zeitweilig als Kühlbehälter zur Aufbewahrung von kühlen oder gekühlten Speisen und Getränken verwendet werden. Die Verkleidung aus einem thermisch isolierenden Material kann dabei zusätzlich oder alternativ zu einer für die Nutzung durch das Haustier vorgesehenen Verkleidung an der Innenseite oder an einer Außenseite des Hohlraums angeordnet sein.

Insbesondere bei einer oberflächenbündigen Anordnung des Sitzelements in einer Ausnehmung in dem Sitzelementgrundkörper kann es vorteilhaft sein, dass optional das Sitzelement entgegen einer Federkraft einer Federeinrichtung rastend an dem Sitzelementgrundkörper festlegbar ist. Durch eine Betätigung einer Lösevorrichtung kann ein rastender und formschlüssiger Eingriff zwischen dem Sitzelement und dem Sitzelementgrundkörper gelöst werden, sodass das Sitzelement durch die Federkraft der Federeinrichtung aus der ursprünglichen Position heraus verlagert und beispielsweise nach außen verschoben oder verschwenkt wird. Das Sitzelement kann dann in einfacher Weise ergriffen und beispielsweise von dem Sitzelementgrundkörper vollständig gelöst und entfernt oder aber in einer anderen Anordnung oder Ausrichtung erneut an den Sitzelementgrundkörper festgelegt werden. Durch die Anordnung und Verwendung derartiger Federeinrichtungen kann ein Bedienungskomfort des Sitzelements während eines Wechsels der bestimmungsgemäßen Nutzung des Tiermöbelelements entweder durch ein Haustier oder durch eine Person erleichtert und komfortabler gestaltet werden.

Einer optionalen Ausgestaltung des Erfindungsgedankens zur Folge ist vorgesehen, dass jedes Sitzmöbelelement entlang eines Umfangrands der Standfläche und/oder entlang eines Umfangrands des Sitzelements mehrere in Umfangsrichtung beabstandet zueinander angeordnete Magnetelemente aufweist, sodass zwei nebeneinander angeordnete Sitzmöbelelemente mit einer von zwei einander zugewandten Magnetelementen ausgeübten Magnetkraft aneinander angezogen werden. Auf diese Weise können in einfacher Weise und ohne zusätzliche erforderliche Handgriffe zwei oder mehr Sitzmöbelelemente nebeneinander angeordnet und aneinander festgelegt werden. Aus der Praxis sind Magnetelemente bekannt, die bei einem vergleichsweise geringen Raumbedarf eine ausreichend hohe Magnetkraft erzeugen und ausüben können, um bei einer bestimmungsgemäßen Benutzung der mehreren miteinander verbundenen Sitzmöbelelemente durch ein Haustier zuverlässig verhindern zu können, dass die nebeneinander angeordneten und magnetisch miteinander verbundenen Sitzmöbelelemente sich unbeabsichtigt voneinander lösen und auseinanderbewegt werden können. Zweckmäßigerweise sind entlang von Seitenkanten der Sitzmöbelelemente jeweils mehrere Magnetelemente beabstandet zueinander angeordnet, sodass zwei nebeneinander angeordnete Sitzmöbelelemente über mehrere Magnetelementpaare aneinander angezogen und festgelegt werden. Es ist dann ebenfalls möglich, zwei Sitzmöbelelemente in verschiedenen Positionen mit einem unterschiedlichen seitlichen Versatz relativ zueinander anzuordnen und magnetisch miteinander zu verbinden.

An Stelle von Magnetelementen können auch andere Verbindungselemente wie beispielsweise Klettverbindungen, rastende Eingriffselemente oder Gurte mit Schnallen vorgesehen sein, die entlang eines Umfangsrands der Standfläche und/oder entlang eines Umfangsrands des Sitzelements angeordnet sind und es ermöglichen, zwei nebeneinander angeordnete Sitzmöbelelemente aneinander festzulegen.

Im Hinblick auf eine möglichst einfache Reinigung oder Erneuerung einer Funktionsschicht eines Sitzmöbelelements ist es gemäß einer besonders vorteilhaften Ausgestaltung des Erfindungsgedankens optional vorgesehen, dass die Funktionsschicht von einem lösbar an der Funktionsoberfläche mit dem Tiermöbelelement verbindbaren Funktionsschichtenelement gebildet wird. Das Funktionsschichtenelement oder eine Beschichtung des Funktionsschichtenelements kann aus einem für Haustiere und insbesondere für Katzen angenehmen Funktionsmaterial wie beispielsweise Sisal, Kork, Jute, Baumwolle, künstlichen oder natürlichen Fasern oder aus einem geeigneten Kunststoffmaterial hergestellt sein und entweder eine weiche bzw. verformbare Oberfläche oder eine kratzfeste, eine raue oder eine von dem Haustier zerkratzbare Oberfläche aufweisen. Das Funktionsschichtenelement kann mit geeigneten Befestigungsmitteln wie beispielsweise mit einer Klettverbindung, mit Magnetelementen oder mit Druckknöpfen an einer Funktionsoberfläche des Tiermöbelelements bzw. eines Sitzmöbelelements befestigt werden.

Um eine Funktionsschicht nach einer längeren Gebrauchsdauer zu reinigen kann das Funktionsschichtenelement von dem Tiermöbelelement gelöst und beispielsweise in einer Waschmaschine oder manuell in einem Waschbecken gewaschen und gereinigt werden. Es ist ebenfalls möglich, eine nach langer Gebrauchsdauer oder nach intensiver Nutzung durch ein Haustier verschlissene oder beschädigte Funktionsschicht von dem Tiermöbelelement zu lösen und durch eine neue Funktionsschicht zu ersetzen. Ein Wechsel einer Funktionsschicht oder mehrerer Funktionsschichten kann auch vorgenommen werden, um den Gesamteindruck des Tiermöbels nach Belieben zu verändern oder an sich verändernde Vorlieben eines Nutzers anzupassen. In Abhängigkeit von den Wünschen eines Nutzers können auch verschiedene Funktionsschichten in zeitlichen Abständen jeweils abwechselnd an dem Tiermöbelelement festgelegt werden, um den Gesamteindruck des Tiermöbels in zeitlichen Abständen zu verändern.

Im Hinblick auf eine möglichst einfache Herstellung von möglichst haltbaren und mechanisch belastbaren Funktionsschichtenelementen ist optional vorgesehen, dass das Funktionsschichtenelement eine Funktionsseite aufweist, welche mindestens bereichsweise mit einem Funktionsmaterial bedeckt ist, und dass das Funktionsschichtenelement eine der Funktionsseite gegenüberliegende Verbindungsseite aufweist, an welcher mindestens ein Verbindungselement zum Festlegen des Funktionsschichtenelements an der Funktionsoberfläche des Tiermöbelelements aufweist. Das Funktionsschichtenelement kann beispielsweise einen plattenförmigen Funktionsschichtenelementgrundkörper aufweisen, der auf einer Funktionsseite mit einem Funktionsmaterial beschichtet ist und auf einer gegenüberliegenden Verbindungsseite ein Verbindungselement oder mehrere Verbindungselemente aufweist. Der plattenförmige Funktionsschichtenelementgrundkörper kann aus einem natürlichen Material wie beispielsweise Kork oder Holz hergestellt sein. Der Funktionsschichtenelementgrundkörper kann auch beispielsweise aus Karton oder Papier, aus Filzmaterial, aus einem Kunststoffmaterial oder aus Metall hergestellt sein. Es ist ebenfalls denkbar, dass der Funktionsschichtenelementgrundkörper biegsam und flexibel oder elastisch verformbar ist und beispielsweise aus einem textilen Material, aus einem Gewebe oder aus einem Gewirk beispielsweise aus natürlichen oder künstlichen Fasern hergestellt ist.

Die Beschichtung mit einem Funktionsmaterial kann aufgeklebt, aufgenäht oder beispielsweise mit Hilfe von Heißklebern aufgebügelt oder mit dem Funktionsschichtenelementgrundkörper verschweißt sein.

Nachfolgend werden einige Ausführungsbeispiele näher erläutert, die exemplarisch in den Zeichnungen dargestellt sind. Es zeigt:
Fig. 1 eine Seitenansicht eines aus mehreren Sitzmöbelelementen und Tiermöbelelementen zusammengefügten Tiermöbels,
Fig. 2 eine Schnittansicht eines in Fig. 1 gezeigten Sitzmöbelelements,
Fig. 3 eine Draufsicht des in Fig. 1 gezeigten Sitzmöbelelements,
Fig. 4 eine Schnittansicht durch einen Teil des in Fig. 1 gezeigten Tiermöbels,
Fig. 5 eine schematische Darstellung eines Funktionsschichtenelements in teilweise auseinandergezogener Ansicht,
Fig. 6 eine schematische Darstellung eines abweichend ausgestalteten Funktionsschichtenelements,
Fig. 7 eine Schnittansicht durch einen Teilbereich von zwei übereinander angeordneten Sitzmöbelelementen,
Fig. 8 eine schematische Seitenansicht des in Fig. 7 dargestellten Teilbereichs,
Fig. 9 eine Schnittansicht durch einen Teilbereich von zwei abweichend ausgestalteten und übereinander angeordneten Sitzmöbelelementen,
Fig. 10 eine schematische Seitenansicht des in Fig. 9 dargestellten Teilbereichs,
Fig 11 eine aus mehreren Sitzmöbelelementen des in Fig. 1 gezeigten Tiermöbels zusammengestellte Sitzmöbelelementengruppe.

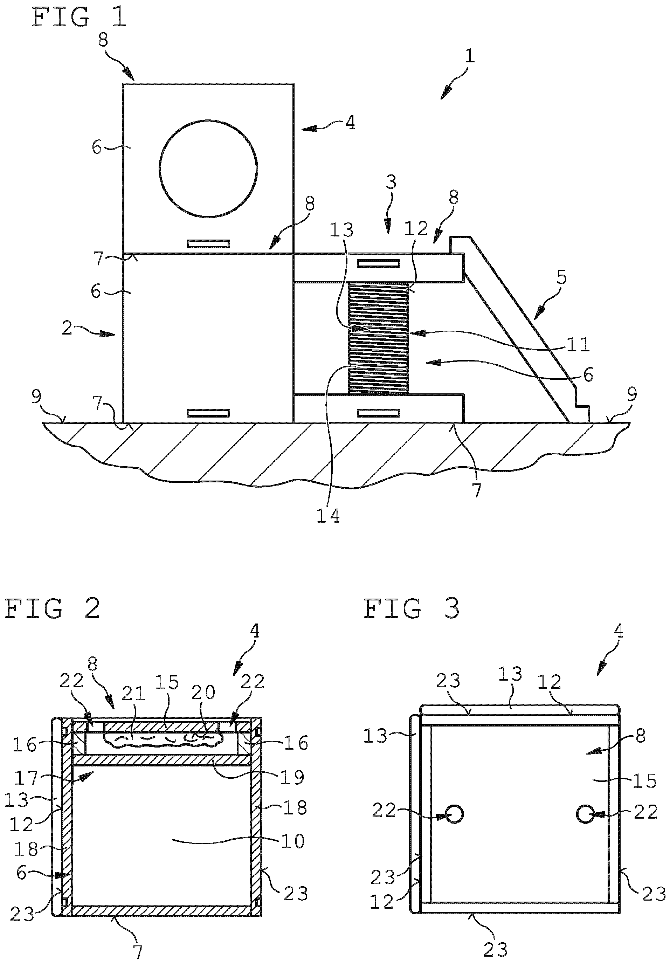

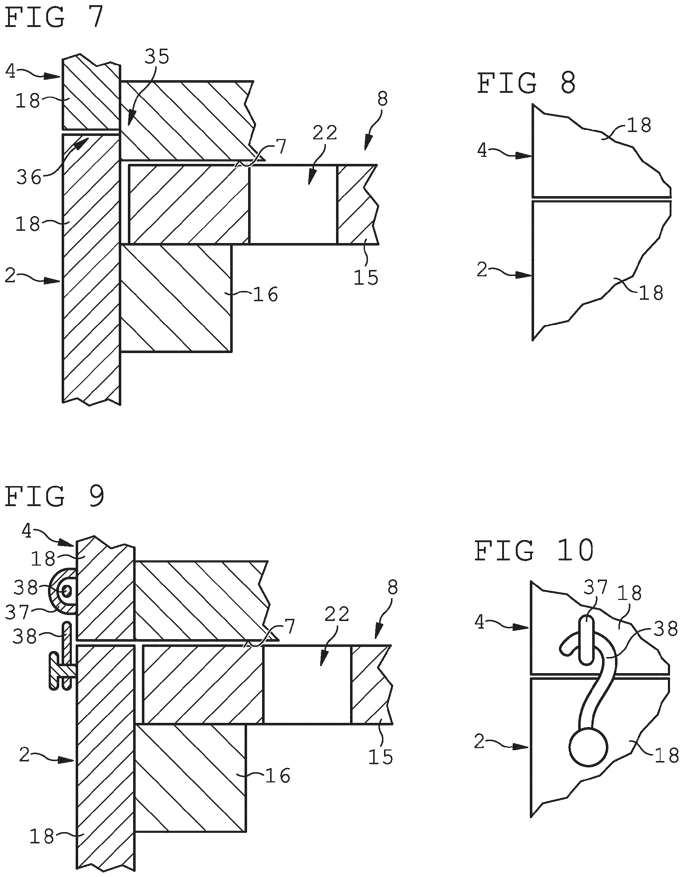

Ein in Fig. 1 exemplarisch dargestelltes Tiermöbel 1 ist aus insgesamt drei Sitzmöbelelementen 2, 3, 4 und aus einem zusätzlichen Tiermöbelelement 5 zusammengefügt. Jedes Sitzmöbelelement 2, 3, 4 weist einen Sitzmöbelgrundkörper 6 mit einer Standfläche 7 und mit einem gegenüberliegend angeordneten Sitzelement 8 auf. Die Sitzmöbelelemente 2 und 3 stehen mit deren Standfläche 7 auf einem Untergrund 9, während das Sitzmöbelelement 4 über dem Sitzmöbelelement 2 angeordnet ist und mit seiner Standfläche 7 auf dem Sitzelement 8 des darunter angeordneten Sitzmöbelelements 2 aufgesetzt ist. In den Fig. 7 bis 10 sind exemplarisch zwei Varianten dargestellt, wie die zwei übereinander angeordneten Sitzmöbelelemente 2 und 4 entweder durch einen formschlüssigen Eingriff oder durch gesonderte Befestigungselemente miteinander verbunden werden können.

Das Sitzmöbelelement 4 weist einen Sitzmöbelgrundkörper 6 mit einem von außen zugänglichen Hohlraum 10 auf. Ein Haustier kann diesen Hohlraum 10 als Rückzugsort zum Ausruhen und Schlafen oder als Spielraum nutzen und sich spielerisch in dem Hohlraum 10 beschäftigen oder durch den Hohlraum 10 hindurch bewegen.

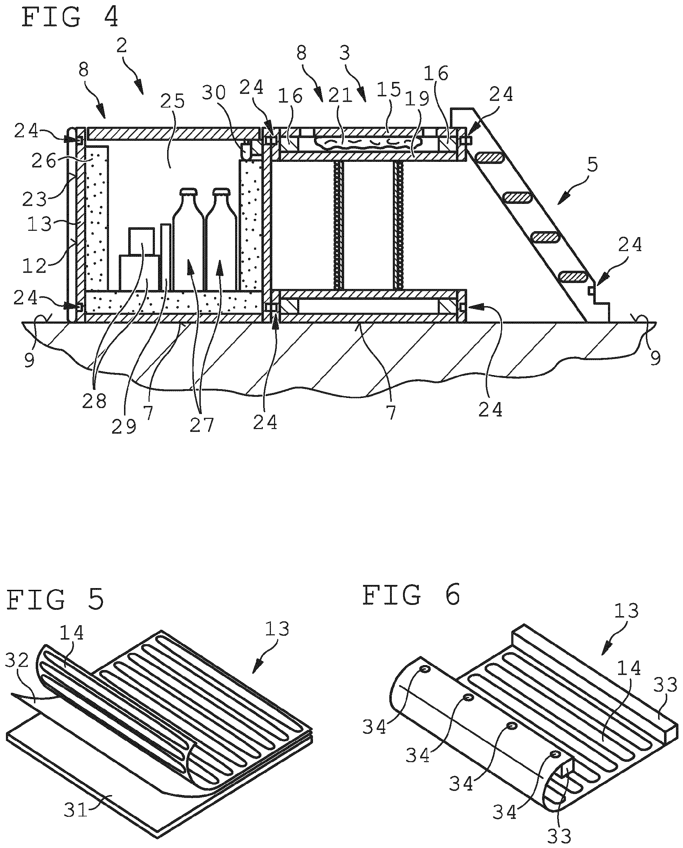

Das Sitzmöbelelement 3 weist einen Sitzmöbelgrundkörper 6 mit einem zylinderförmig ausgebildeten Verbindungsbereich 11 zwischen der Standfläche 7 einerseits und dem Sitzelement 8 andererseits auf. Der Verbindungsbereich 11 bildet eine Funktionsoberfläche 12, auf welcher ein Funktionsschichtenelement 13 lösbar festgelegt ist. Das Funktionsschichtenelement 13 weist eine Beschichtung aus einem Funktionsmaterial 14 wie beispielsweise einer Sisalkordel oder einem anderen natürlichen Fasermaterial wie beispielsweise Kokosfasern auf. Das Funktionsmaterial 14 kann auch beispielsweise Kunstleder, eine Tapete, ein Kunststoffschaum oder ein künstlich hergestelltes Material wie etwa Ethylenvinylacetat, Polyvinylchlorid oder Polyethylen mit vorteilhaften Oberflächeneigenschaften für einen Tierkontakt oder insbesondere einen Tierkrallenkontakt sein. In den Fig. 5 und 6 sind beispielhaft verschiedene Varianten von Funktionsschichtenelementen 13 gezeigt.

Das Tiermöbelelement 5 ist als Leiterelement ausgebildet und seitlich an das Sitzelement 8 des Sitzmöbelelements 3 angelehnt. Dieses Tiermöbelelement 5 oder ein baugleiches weiteres Tiermöbelelement 5 könnte auch auf dem Sitzelement 8 des Sitzmöbelelements 3 aufgestellt und seitlich an das Sitzelement 8 des daneben angeordneten Sitzmöbelelements 4 angelehnt sein.

Alle Sitzmöbelelemente 2, 3, 4 können beliebig nebeneinander und übereinander angeordnet sein und nach Belieben mit weiteren Tiermöbelelementen 5 kombiniert werden. Auf diese Weise können mit wenigen Sitzmöbelelementen 2, 3, 4 zahlreiche verschieden ausgestaltete Tiermöbel 1 errichtet werden. Die Sitzmöbelelemente 2, 3, 4 und die Tiermöbelelemente 5 können nach einer Gebrauchsdauer neu angeordnet und kombiniert werden, sodass mit wenigen Sitzmöbelelementen 2, 3, 4 und Tiermöbelelementen 5 eine große Vielfalt an Tiermöbeln 1 ermöglicht und eine entsprechende Abwechslung für ein Haustier geboten werden kann.

In den Fig. 2 und 3 ist lediglich beispielhaft das in Fig. 1 gezeigte Sitzmöbelelement 4 in Alleinstellung in einer vertikalen Schnittansicht und in einer Draufsicht dargestellt. An dem Sitzmöbelgrundkörper 6 des Sitzmöbelelements 4 ist ein als Sitzplatte 15 ausgebildetes Sitzelement 8 lose auf Auflageleisten 16 aufgelegt, die zumindest abschnittsweise entlang eines Umfangsrands in einem Innenraum 17 des Sitzmöbelgrundkörpers 6 an Sitzmöbelgrundkörperseitenwänden 18 befestigt sind. An Stelle der Auflageleisten 16 können auch Winkelelemente vorgesehen sein, bei denen ein abstehender Winkelschenkel eine Auflagefläche für das Sitzelement 8 bietet. Der in dem Innenraum 17 ausgebildete und von Außen zugängliche Hohlraum 10 ist in Richtung des Sitzelements 8 durch eine Schutzplatte 19 begrenzt, die verhindert, dass ein sich in dem Hohlraum 10 aufhaltendes Haustier von innen an die Sitzplatte 15 herankommt und beispielsweise Tierhaare an der Sitzplatte 15 anhaften oder die Sitzplatte 15 durch das Haustier zerkratzt oder beschädigt wird. An einer Nutzseite 20 der Sitzplatte 15 kann ein Kissen 21 oder eine Polsterung angeordnet sein, sodass ein Nutzungskomfort für eine auf der Sitzplatte 15 des Sitzmöbelelements 4 sitzende Person verbessert werden kann.

Das Kissen 21 oder eine Polsterung können dauerhaft an der Sitzplatte 15 befestigt sein oder aber lösbar beispielsweise mit einer Klettverbindung oder mit gesonderten Bändern oder Gurten oder mit Druckknöpfen auf der Nutzseite 20 der Sitzplatte 15 festgelegt sein.

Um das Sitzmöbelelement 4 als Sitzmöglichkeit zu nutzen muss das Sitzmöbelelement 4 aus dem Tiermöbel 1 herausgenommen und mit seiner Standfläche 7 auf den Untergrund 9 gestellt werden. Anschließend muss die Sitzplatte 15 ergriffen und von dem Sitzmöbelgrundkörper 6 abgehoben, umgedreht und mit der Nutzseite 20 nach oben auf den Sitzmöbelgrundkörper 6 bzw. auf die Auflageleisten 16 wieder aufgelegt werden, sodass die Sitzplatte 15 mit der Nutzfläche 20 und dem Kissen 21 nach oben das Sitzelement 8 und damit eine Sitzgelegenheit für eine Person bilden. Um die Sitzplatte 15 einfach ergreifen und von dem Sitzmöbelgrundkörper 6 lösen oder wieder auflegen zu können weist die Sitzplatte 15 mehrere Löcher 22 auf, durch welche ein Finger oder mehrere Finger einer Hand einer Person hindurchgreifen können. Ein solches Loch 22 kann eine kreisrunde, eine halbkreisförmige, eine rechteckige oder eine beliebig geformte Querschnittsfläche aufweisen.

Die Sitzmöbelgrundkörperseitenwände 18 bilden an den nach außen gerichteten Außenseiten 23 jeweils Funktionsoberflächen 12, an denen wahlweise ein Funktionsschichtenelement 13 lösbar festgelegt ist.

In Fig. 4 ist eine vertikale Schnittansicht der in Fig. 1 gezeigten Sitzmöbelelemente 2 und 3 sowie des daran anlehnenden Tiermöbelelements 5 gezeigt. Die beiden nebeneinander angeordneten Sitzmöbelelemente 2 und 3 weisen entlang eines Umfangsrands in der Nähe der Standfläche 7 und im Bereich des Sitzelements 8 mehrere in Umfangsrichtung beabstandet zueinander angeordnete Magnetelemente 24 aufweist, sodass die beiden nebeneinander angeordneten Sitzmöbelelemente 2 und 3 mit einer von zwei einander zugewandten Magnetelementen 24 ausgeübten Magnetkraft aneinander angezogen werden. Auch das als Leiterelement ausgestaltete Tiermöbelelement 5 weist an seinen einander gegenüberliegenden Enden jeweils Magnetelemente 24 auf, sodass das an dem Sitzelement 8 des Sitzmöbelelements 3 anlehnende Ende des Tiermöbelelements 5 mit Magnetkraft an das Sitzelement 8 angezogen und daran festgehalten ist.

Das Sitzmöbelelement 2 weist ebenfalls einen Hohlraum 25 auf, der über eine längs einer Seitenkante schwenkbar gelagerte Sitzplatte 15 zugänglich ist, die nach oben verschwenkt und dadurch der Hohlraum 25 zugänglich gemacht werden kann, oder die nach unten verschwenkt werden kann und dadurch den Hohlraum 25 abdeckt und verschließt. Der Hohlraum 25 weist eine Verkleidung 26 aus einem thermisch isolierenden Material auf, sodass in dem Hohlraum 25 befindliche Produkte thermisch isoliert von der Umgebung aufbewahrt werden können. So können beispielsweise kühle Getränkeflaschen 27 oder andere vorab gekühlte Lebensmittel 28 gegebenenfalls zusammen mit Kühlelementen 29 während einer Nutzung der Sitzmöbelelemente 2, 3, 4 durch Personen in dem Sitzmöbelelement 2 aufbewahrt und kühl gelagert werden. Um den Nutzungskomfort zu erhöhen kann eine Federeinrichtung 30 unterhalb der schwenkbar gelagerten Sitzplatte 15 so angeordnet und ausgebildet sein, dass durch ein kurzes Andrücken der Sitzplatte 15 ein Auswurfelement federkraftbetätigt verlagert wird und die Sitzplatte 15 etwas verschwenkt, sodass danach die Sitzplatte 15 von einer Person ergriffen und vollständig aufgeschwenkt oder wieder gegen die Federkraft der Federeinrichtung 30 zurück in die geschlossene Position verschwenkt und dort festgelegt werden kann.

In den Fig. 5 und 6 sind exemplarisch zwei verschiedene Varianten von Funktionsschichtenelementen 13 dargestellt. Ein plattenförmiger Funktionsschichtenelementgrundkörper 31 beispielsweise aus Holz oder aus Kork ist mit einem Funktionsmaterial 14 beschichtet. Das Funktionsmaterial 14 kann beispielsweise eine Sisalmatte oder eine mäanderförmig flächig verlegte Sisalkordel sein, die mit einer Heißkleberbeschichtung 32 oder Sprühkleberbeschichtung auf den Funktionsschichtenelementgrundkörper 31 aufgeklebt ist. Das Funktionsmaterial 14 kann auch jedes geeignete natürliche oder künstliche Material sein. Auf einer gegenüberliegenden Seite kann der plattenförmige Funktionsschichtenelementgrundkörper 31 eine oder mehrere Klettverbindungen aufweisen, die in Fig. 5 nicht sichtbar sind, um den Funktionsschichtenelementgrundkörper 31 mit dem Funktionsmaterial 14 nach außen an einer Funktionsoberfläche 12 eines Sitzmöbelelements 2, 3, 4 oder an einem geeignet ausgestalteten Tiermöbelelement 5 lösbar festzulegen. Bei dem in Fig. 6 gezeigten Ausführungsbeispiel weist das Funktionsschichtenelement 13 zwei Randleisten 33 auf. Entlang der Randleisten 33 sind mehrere Druckknopfelemente 34 angeordnet, die mit daran angepassten Druckknopfelementen verbunden werden können, die an den Funktionsoberflächen 12 der Sitzmöbelelemente 2, 3, 4 befestigt sind. Es kann auch vorgesehen sein, dass das Funktionsschichtenelement 13 einander gegenüberliegende Randleisten 33 aus einem flexiblen, elastischen oder starren Material aufweist. Das Funktionsschichtenelement 13 kann bei einigen oder allen Randleisten 33 einseitig oder beidseitig angeordnete Befestigungselemente aufweisen. Ein Funktionsschichtenelement 13 aus einem flexiblen oder elastischen Material kann beispielsweise wahlweise an einer ebenen Außenseite 23 eines Sitzelementgrundkörpers 6 oder an einem zylinderförmig oder gekrümmt ausgebildeten Verbindungsbereich 11 eines Sitzelementgrundkörpers 6 befestigt werden.

In den Fig. 7 und 8 ist beispielhaft dargestellt, das die Sitzmöbelelemente 2, 3, 4 im Bereich der jeweiligen Standfläche 7 eine entlang eines Umfangsrands umlaufende stufenförmige seitliche Ausnehmung 35 aufweisen können, und die Sitzmöbelelemente 2, 3, 4 im Bereich des jeweiligen Sitzelements 8 eine entlang eines Umfangsrands umlaufende stufenförmig vorspringende Ausformung 36 aufweisen können, sodass das mit der Standfläche 7 auf dem Sitzelement 8 des Sitzmöbelelements 2 aufgesetzte Sitzmöbelelement 4 durch einen formschlüssigen Eingriff gegen seitliches Verrutschen gesichert ist.

Es ist ebenfalls möglich, sowohl die Standfläche 7 als auch eine Außenseite des Sitzelements 8 vollständig ebenflächig auszugestalten und die beiden Sitzmöbelelemente 2, 4 durch zusätzliche Befestigungselemente wie beispielsweise einen schwenkbar an dem Sitzmöbelelement 2 gelagerten und in eine Öse 37 an dem Sitzmöbelelement 4 eingreifenden Haken 38 miteinander zu verbinden. An Stelle eines in die Öse 37 eingreifenden Hakens 38 können auch andere Befestigungselemente wie beispielsweise verlagerbare oder verschwenkbare Riegel oder Bolzen, verformbare Rastnasen oder gesondert betätigbare Schlösser verwendet werden.

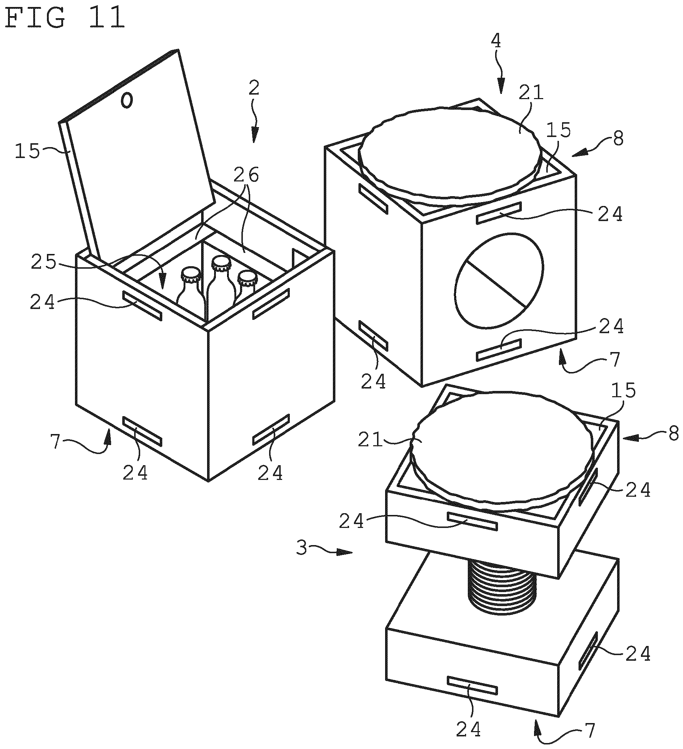

In Fig. 11 ist zur Veranschaulichung eine aus den Sitzmöbelelementen 2, 3, 4 des in Fig. 1 gezeigten Tiermöbels 1 zusammengestellte Sitzmöbelelementengruppe gezeigt, die von mehreren Personen beispielsweise bei einer Feier oder bei einem gemeinsamen Treffen genutzt werden kann und mehrere Sitzmöglichkeiten für Personen sowie zusätzlich eine Aufbewahrungsmöglichkeit für gekühlte Lebensmittel bieten kann.

## Patentansprüche

1. Tiermöbel (1) für Haustiere, insbesondere für Katzen, mit zwei oder mehreren miteinander verbindbaren Tiermöbelelementen (5), wobei mindestens zwei Tiermöbelelemente (5) übereinander angeordnet lösbar formschlüssig miteinander verbindbar sind, und wobei mindestens ein Tiermöbelelement (5) eine mit einer Funktionsschicht bedeckte Funktionsoberfläche (12) aufweist, **dadurch gekennzeichnet, dass** mindestens ein Tiermöbelelement (5) als Sitzmöbelelement (2, 3, 4) ausgebildet ist und einen Sitzmöbelgrundkörper (6) mit einer Standfläche (7) und mit einem gegenüberliegend an dem Sitzmöbelgrundkörper (6) angeordneten Sitzelement (8) aufweist, wobei das Sitzmöbelelement (2, 3, 4) mit der Standfläche (7) auf einer Bodenfläche aufstellbar ist und das Sitzelement (8) in einem Sitzabstand von der Standfläche (7) angeordnet ist und eine ausreichend große von der Standfläche (7) weg gerichtete Sitzfläche aufweist, sodass die Sitzfläche des auf der Bodenfläche aufstehenden Sitzmöbelelements (2, 3, 4) eine Sitzgelegenheit für eine Person bildet.

2. Tiermöbel (1) nach Anspruch 1, **dadurch gekennzeichnet, dass** das Sitzelement (8) eine Sitzplatte (15) ist, die auf einer der Standfläche (7) gegenüberliegenden Seite des Sitzmöbelelements (2, 3, 4) lösbar mit dem Sitzmöbelgrundkörper (6) verbindbar ist.

3. Tiermöbel (1) nach Anspruch 2, **dadurch gekennzeichnet, dass** das Sitzelement (8) wahlweise mit der Sitzfläche oder mit einer der Sitzfläche gegenüberliegenden Innenfläche nach außen gerichtet mit dem Sitzmöbelgrundkörper (6) verbindbar ist.

4. Tiermöbel (1) nach Anspruch 2 oder Anspruch 3, **dadurch gekennzeichnet, dass** der Sitzelementgrundkörper (6) auf einer der Standfläche (7) zugewandten Seite des Sitzelements (8) eine Schutzplatte (19) aufweist, welche eine der Standfläche (7) des Sitzelementgrundkörpers (6) zugewandte Außenseite des Sitzelements (8) von einem unmittelbaren Kontakt mit einem Haustier schützt.

5. Tiermöbel (1) nach einem der Ansprüche 3 oder 4, **dadurch gekennzeichnet, dass** das Sitzelement (8) ein Handhabungselement aufweist, mit welchem das Sitzelement (8) mit einer Hand von einer Person ergriffen werden kann, um von dem Sitzelementgrundkörper (6) gelöst oder damit verbunden zu werden.

6. Tiermöbel (1) nach einem der voranstehenden Ansprüche, **dadurch gekennzeichnet, dass** der Sitzmöbelgrundkörper (6) eine Aufnahmeeinrichtung zur Aufnahme und Festlegung eines Rückenlehnenelements aufweist.

7. Tiermöbel (1) nach einem der voranstehenden Ansprüche, **dadurch gekennzeichnet, dass** der Sitzmöbelgrundkörper (6) einen von außen zugänglichen Hohlraum (10, 25) aufweist.

8. Tiermöbel (1) nach Anspruch 7, **dadurch gekennzeichnet, dass** eine Öffnung des Hohlraums (10, 25) von dem mit dem Sitzelementgrundkörper (6) verbundenen Sitzelement (8) bedeckt ist.

9. Tiermöbel (1) nach Anspruch 7 oder Anspruch 8, **dadurch gekennzeichnet, dass** der von außen zugängliche Hohlraum (25) eine Verkleidung (26) aus einem thermisch isolierenden Material aufweist.

10. Tiermöbel (1) nach einem der voranstehenden Ansprüche, **dadurch gekennzeichnet, dass** das Sitzelement (8) entgegen einer Federkraft einer Federeinrichtung (30) rastend an dem Sitzelementgrundkörper (6) festlegbar ist.

11. Tiermöbel (1) nach einem der voranstehenden Ansprüche, **dadurch gekennzeichnet, dass** jedes Sitzmöbelelement (2, 3, 4) entlang eines Umfangsrands der Standfläche (7) und/oder entlang eines Umfangsrands des Sitzelements (8) mehrere in Umfangsrichtung beabstandet zueinander angeordnete Magnetelemente (24) aufweist, sodass zwei nebeneinander angeordnete Sitzmöbelelemente (2, 3, 4) mit einer von zwei einander zugewandten Magnetelementen (24) ausgeübten Magnetkraft aneinander angezogen werden.

12. Tiermöbel (1) nach einem der voranstehenden Ansprüche, **dadurch gekennzeichnet, dass** die Funktionsschicht von einem lösbar an der Funktionsoberfläche (12) mit dem Tiermöbelelement (5) verbindbaren Funktionsschichtenelement (13) gebildet wird.

13. Tiermöbel (1) nach Anspruch 12, **dadurch gekennzeichnet, dass** das Funktionsschichtenelement (13) eine Funktionsseite aufweist, welche mindestens bereichsweise mit einem Funktionsmaterial (14) bedeckt ist, und dass das Funktionsschichtenelement (13) eine der Funktionsseite gegenüberliegende Verbindungsseite aufweist, an welcher mindestens ein Verbindungselement zum Festlegen des Funktionsschichtenelements (13) an der Funktionsoberfläche (12) des Tiermöbelelements (5) aufweist.
